# FASCICULE DE BREVET EUROPEEN

(11) **EP 0 929 477 B1**
(45) Date de publication et mention de la délivrance du brevet: **06.08.2003**
(21) Numéro de dépôt: 98903984.7
(22) Date de dépôt: 05.03.1998
(51) Int. Cl.: B65D 88/10, B65D 90/38

(54) **RECIPIENT POUR LIQUIDES, NOTAMMENT POUR LE VIN ET LES ALCOOLS FORTS**
FLÜSSIGKEITSBEHÄLTER, INSBESONDERE FÜR WEIN UND SPIRITUOSEN
CONTAINER FOR LIQUIDS, PARTICULARLY FOR WINE AND SPIRITS

(30) Priorité: 11.03.1997 CH 56597
(43) Date de publication de la demande: 21.07.1999
(73) Titulaire: Savioz, Cyrille, 1974 Arbaz (CH)
(72) Inventeur: Savioz, Cyrille, 1974 Arbaz (CH)
(74) Mandataire: Reuteler, Raymond Werner
(86) Numéro de dépôt international: CH9800089
(87) Numéro de publication internationale: WO98045192

(56) Documents cités:
- DE-C- 590 575
- DE-C- 651 781
- FR-A- 1 227 430

## Description

La présente invention concerne un récipient pour liquides, notamment pour le vin et les alcools forts.

Depuis l'avènement de la tonnellerie qui a remplacé les amphores et autres vases antiques trop fragiles, le bois - surtout le bois de chêne - a été utilisé dans la fabrication de la fûtaille, des tonneaux, des foudres, des muids et d'autres récipients de diverses contenances. Plus récemment, de tels récipients ont été réalisés en métal, notamment en acier inox, tout en gardant la forme des tonneaux usuels qui présente l'avantage d'une certaine facilité de manipulation et d'un volume d'air relativement réduit au voisinage de l'ouverture de remplissage au-dessus du niveau de liquide remplissant le tonneau.

La présente invention vise à fournir un récipient qui - tout en permettant l'utilisation du bois traditionnel comme matériau préféré, mais aussi d'autres matériaux tels que le métal, et tout en maintenant l'avantage du volume d'air réduit dans le récipient rempli - permette une fabrication nettement plus économique que celle des tonneaux usuels et facilite notamment le transport, le stockage ainsi que le démontage et le remontage de ces récipients.

A cet effet, le récipient selon l'invention est caractérisé en ce qu'il a essentiellement une forme de parallélépipède rectangle ou de cube et comporte six panneaux formant les faces du récipient, à savoir un panneau de fond, un panneau de dessus, un panneau frontal, un panneau arrière et deux pannaux latéraux, le panneau de dessus ayant à proximité de son bord frontal, sensiblement au milieu entre les panneaux latéraux, un trou de remplissage, la surface intérieure du panneau de dessus formant, par rapport à un plan horizontal, trois coins, à savoir un premier coin prismatique présentant une surface plane inclinée par rapport à un plan horizontal en descendant depuis le panneau frontal vers le panneau arrière, et deux coins latéraux présentant chacun une surface plane inclinée vers ladite surface inclinée du premier coin depuis un point de l'arête intérieure formée par un panneau latéral correspondant et le panneau frontal, jusqu'au voisinage dudit trou de remplissage.

De préférence, le premier coin est formé par une inclinaison d'un panneau de dessus d'épaisseur constante, chacun des deux coins latéraux étant constitué par une pièce essentiellement en forme de tétraèdre.

Le panneau frontal peut comporter un trou de vidange au voisinage du panneau de fond, ce panneau de fond étant de préférence incliné vers le bas en direction du panneau frontal.

Les panneaux de dessus et de fond sont de préférence montés entre les deux panneaux latéraux et l'ensemble comporte avantageusement des rainures d'assemblage à l'endroit de la jonction entre les différents panneaux. Des joints d'étanchéité peuvent être disposés dans ces rainures d'assemblage.

Selon une forme d'exécution préférée, le récipient est muni d'épars disposés au moins sur les panneaux latéraux, deux épars opposés étant réunis à leurs extrémités par deux tiges métalliques s'étendant sur la largeur des panneaux de dessus et de fond. Ces tiges comportent avantageusement au moins une extrémité filetée munie d'un écrou.

D'autres caractéristiques, buts et avantages de l'invention ressortiront de la description donnée ci-après d'un exemple de réalisation illustré dans le dessin annexé, dans lequel:
la Fig. 1 est une vue en perspective d'un récipient selon l'invention;
la Fig. 2 est une vue en coupe longitudinale du récipient selon la Fig. 1;
la Fig. 3 est une vue en coupe transversale le long de la ligne III-III de la Fig. 2; et
la Fig. 4 est une vue depuis l'arrière du même récipient.

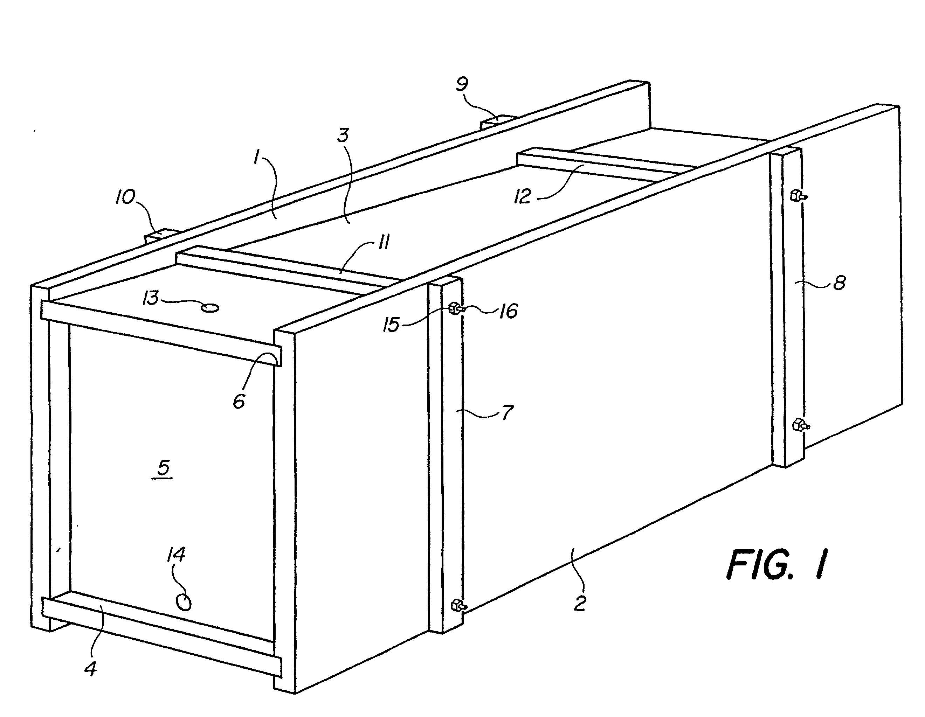

La Fig. 1 montre la forme générale du récipient dont l'enveloppe est un parallélépipède rectangle. Ce récipient est formé par six panneaux, par exemple en bois de chêne, dont on voit sur la Fig. 1 les panneaux latéraux 1 et 2, le panneau de dessus 3, le panneau de fond 4 et le panneau frontal 5, le panneau arrière n'étant pas visible. Les différents panneaux sont assemblés au moyen de rainures d'assemblage telles que 6 et l'ensemble est renforcé, dans cet exemple, par des épars latéraux 7, 8, 9, 10 et des épars horizontaux disposés sur les pannaux de dessus et de fond, parmi lesquels seuls les épars 11 et 12 sont visibles sur la Fig. 1.

Le panneau de dessus 3 comporte un trou de remplisssage 13 au voisinage du panneau frontal 5, et ce panneau frontal comporte un trou de vidange 14 au voisinage du panneau de fond 4. Sur la Fig. 1, on distingue également des écrous, tels que 15, qui sont montés sur des tiges, telles que 16, traversant les panneaux latéraux 1 et 2 et les épars correspondants, par exemple 7, 11, 10, sur toute la largeur des panneaux de dessus et de fond pour assurer le maintien de l'ensemble du récipient.

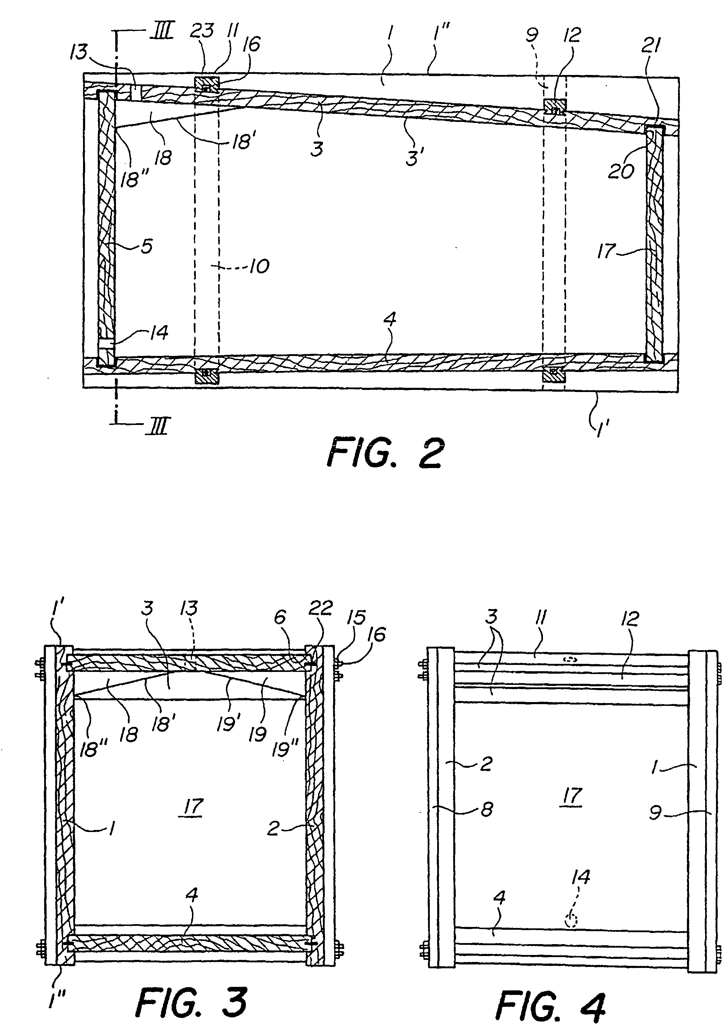

La Fig. 2 montre en coupe longitudinale la position du panneau de dessus 3 d'épaisseur constante, qui est incliné en descendant depuis le panneau frontal 5 jusqu'au panneau arrière 17, de sorte que la surface intérieure 3' de ce panneau supérieur est inclinée par rapport à un plan horizontal, un tel plan horizontal passant dans la position normale d'utilisation du récipient par les côtés inférieurs ou supérieurs des deux panneaux latéraux opposés, tels que le côté 1', ou le côté 1" du panneau 1 indiqués sur la Fig. 2. La surface inclinée 3' délimite ainsi un coin prismatique dans le volume du récipient par rapport à la forme d'un parallélépipède rectangle.

On voit également sur la Fig. 2 ainsi que sur la Fig. 3 l'agencement sur la surface 3' de deux pièces 18 et 19 en forme de coins qui présentent, respectivement, des surfaces planes 18' et 19', inclinées vers le haut, c'est-à-dire vers la surface 3', respectivement depuis un point 18" situé sur l'arête intérieure formée par le panneau frontal 5 et le panneau latéral 1 et depuis un point 19" de l'arête intérieure formée par le panneau 5 et le panneau 2.

Il ressort des Figures 2 et 3 que les surfaces de coin 3', 18' et 19' limitent l'espace libre au voisinage du trou de remplissage 13 de façon à rendre le volume d'air résiduel, lorsque le récipient est rempli de liquide en position horizontale, très petit. Il s'ensuit que la surface du liquide exposé à l'oxidation par l'air contenu dans le récipient plein est également très petite.

La Fig. 2 montre en outre que le panneau de fond 4 du récipient est légèrement incliné vers le bas depuis le panneau arrière 17 vers le panneau frontal 5, ce qui facilite la vidange du récipient par le trou 14.

Les vues en coupe selon les Figures 2 et 3 montrent par ailleurs que les rainures d'assemblage, telles que 20, sont munies d'un joint, tel que 21, ayant une section en forme de U entourant le bord du panneau, tel que le panneau 17, inséré dans la rainure, de manière à assurer l'étanchéité au niveau de la jonction des panneaux. Une autre manière de réaliser l'étanchéité est montrée à la Fig. 3 pour les rainures longitudinales, telles que 6, un joint 22 en forme de lame étant inséré dans des fentes des panneaux à assembler, perpendiculairement au fond de la rainure et au bord du panneau pénétrant dans cette rainure.

La Fig. 2 montre par ailleurs la disposition des épars horizontaux sur les panneaux de dessus 3 et de fond 4, ces épars, tels que 11, étant fixés aux panneaux correspondants par un assemblage en queue d'aigle. Le côté inférieur de ces épars présente une rainure longitudinale, telle que 23, dans laquelle sera logée la tige métallique correspondante, telle que 16, munie à ses extrémités d'écrous de fixation, tels que 15.

La Fig. 4 est une vue de l'arrière du récipient complétant l'illustration du présent exemple d'exécution, les éléments visibles étant désignés par les mêmes chiffres de référence que dans les figures précédentes.

Il ressort de ce qui précède que le récipient selon l'invention peut être réalisé de façon à être parfaitement étanche, sur la base de panneaux pouvant être fabriqués de façon très économique par des machines automatiques, la conception de ce récipient permettant en outre un assemblage et un démontage très simples des différentes parties. Une caractéristique essentielle du récipient selon l'invention est la réduction du volume d'air résiduel par la présence des trois surfaces de coin culminant au voisinage du trou de remplissage.

La forme extérieure du récipient, telle que définie par son enveloppe constituant un parallélépidède rectangle dont les deux panneaux latéraux rectangulaires font partie, permet un empilage des récipients et une utilisation optimale de l'espace disponible, que ce soit au moment du transport, du stockage ou de l'utilisation.

## Revendications

1. Récipient pour liquides, notamment pour le vin et les alcools forts, **caractérisé en ce qu'**il a essentiellement une forme de parallélépipède rectangle ou de cube et comporte six panneaux formant les faces du récipient, à savoir un panneau de fond (4), un panneau de dessus (3), un panneau frontal (5), un panneau arrière (17) et deux pannaux latéraux (1,2), le panneau de dessus (3) ayant à proximité de son bord frontal, sensiblement au milieu entre les panneaux latéraux, un trou de remplissage (13), la surface intérieure (3') du panneau de dessus (3) formant, par rapport à un plan horizontal, trois coins, à savoir un premier coin prismatique présentant une surface plane (3') inclinée par rapport à un plan horizontal en descendant depuis le panneau frontal (5) vers le panneau arrière (17), et deux coins latéraux présentant chacun une surface plane (18',19') inclinée vers ladite surface inclinée (3') du premier coin depuis un point de l'arête (18", 19") intérieure formée par un panneau latéral (1,2) correspondant et le panneau frontal (5), jusqu'au voisinage dudit trou de remplissage (13).

2. Récipient selon la revendication 1, **caractérisé en ce que** ledit premier coin est formé par une inclinaison d'un panneau de dessus (3) d'épaisseur constante, chacun des deux coins latéraux étant constitué par une pièce (18,19) essentiellement en forme de tétraèdre.

3. Récipient selon la revendication 1, **caractérisé en ce que** le panneau frontal (5) comporte un trou de vidange (14) au voisinage du panneau de fond (4), ce panneau de fond étant incliné vers le bas en direction du panneau frontal.

4. Récipient selon la revendication 1, **caractérisé en ce que** les panneaux de dessus (3) et de fond (4) sont montés entre les deux panneaux latéraux (1,2).

5. Récipient selon la revendication 1 ou la revendication 4, **caractérisé en ce qu'**il comporte des rainures d'assemblage (20) à l'endroit de la jonction entre les panneaux.

6. Récipient selon la revendication 5, **caractérisé en ce que** des joints d'étanchéité (21) sont disposés dans lesdites rainures d'assemblage.

7. Récipient selon la revendication 1, **caractérisé en ce qu'**il est muni d'épars (11) disposés au moins sur les panneaux latéraux (1,2), deux épars opposés étant réunis à leurs extrémités par deux tiges métalliques (16) s'étendant sur la largeur des panneaux de dessus et de fond.

8. Récipient selon la revendication 7, **caractérisé en ce que** lesdites tiges (16) comportent au moins une extrémité filetée, munie d'un écrou (15).

## Claims

1. A container for liquids, in particular for wine and for strong alcohols, **characterised in that** it has substantially the shape of a rectangular parallelepiped or of a cube and **in that** it comprises six panels forming the faces of the container, namely a bottom panel, a top panel, a front panel, a back panel and two side panels, the top panel having, in the vicinity of its front edge, substantially in the middle between the side panels, a filling opening, the inner surface of the top panel forming, with respect to a horizontal plane, three wedges, namely a first prismatic wedge exhibiting a surface which slopes downwards relative to a horizontal plane, in the direction from the front panel to the back panel and two side wedges having each one a flat surface sloping towards said sloping surface of the first wedge from one point located on the inner ridge formed by a corresponding side panel and the front panel, up to the vicinity of said filling hole.

2. A container according to claim 1, **characterised in that** said first wedge is formed by the sloping of a top panel of a constant thickness, each one of the side wedges being substantially of a tetrahedral shape.

3. A container according to claim 1, **characterised in that** the front panel includes an emptying hole in the vicinity of the bottom panel, this bottom panel being sloped downwards in the direction of the front panel.

4. A container according to claim 1, **characterised in that** the top and the bottom panels are mounted between the two side panels.

5. A container according to claim 1 or claim 4, **characterised in that** it includes a joining groove at the location of the junction between the panels.

6. A container according to claim 5, **characterised in that** sealing members are arranged in said joining grooves.

7. A container according to claim 1, **characterised in that** it is provided with spars disposed at least on the side panels, two opposite spars being connected together at their ends by two metal rods extending over the width of the top and of the bottom panels.

8. A container according to claim 7, **characterised in that** said rods include at least one threaded end, provided with a nut.

## Patentansprüche

1. Behälter für Flüssigkeiten, insbesondere für Wein und Spirituosen, **dadurch gekennzeichnet, dass** er im Wesentlichen die Gestalt eines rechwinkligen Parallelepipeds oder Würfels besitzt und sechs Platten umfasst, die die Seiten des Behälters bilden, nämlich eine Bodenplatte (4), eine Deckplatte (3), eine vordere Platte (5), eine rückseitige Platte (17) sowie zwei seitliche Platten (1, 2), wobei die Deckplatte (3) nahe ihrer Vorderkante und im Wesentlichen in der Mitte zwischen den seitlichen Platten ein Füllloch (13) besitzt und die Innenwand (3') der Deckplatte (3) bezüglich einer waagrechten Ebene drei Ecken bildet, nämlich eine erste, prismatische Ecke, die eine ebene Fläche (3') aufweist, die bezüglich einer waagerechten Ebene geneigt ist und von der vorderen Platte (5) zur rückseitigen Platte (17) hin abfällt, sowie zwei seitliche Ecken, die je eine ebene Fläche (18', 19') aufweisen, die von einem Punkt der Innenkante (18", 19"), die durch eine entsprechende seitliche Platte (1, 2) und die Vorderplatte (5) gebildet wird, bis zur Nachbarschaft dieses Fülllochs (13) zu dieser geneigten Fläche (3') der ersten Ecke hin geneigt ist.

2. Behälter nach Anspruch 1, **dadurch gekennzeichnet, dass** diese erste Ecke durch eine Neigung einer Deckplatte (3) von konstanter Dicke gebildet wird, wobei jede der beiden seitlichen Ecken durch ein im Wesentlichen tetraederförmiges Stück (18, 19) gebildet wird.

3. Behälter nach Anspruch 1, **dadurch gekennzeichnet, dass** die vordere Platte (5) eine Ablassöffnung (14) in Nachbarschaft zur Bodenplatte (4) umfasst, wobei diese Bodenplatte in Richtung auf die vordere Platte abwärts geneigt ist.

4. Behälter nach Anspruch 1, **dadurch gekennzeichnet, dass** die Deckplatte (3) und die Bodenplatte (4) zwischen die beiden seitlichen Platten (1, 2) montiert sind.

5. Behälter nach Anspruch 1 oder Anspruch 4, **dadurch gekennzeichnet, dass** er Montagerillen (10) an der Verbindungsstelle zwischen den Platten umfasst.

6. Behälter nach Anspruch 5, **dadurch gekennzeichnet, dass** Dichtungen (21) in diesen Montagerillen angeordnet sind.

7. Behälter nach Anspruch 1, **dadurch gekennzeichnet, dass** er mit Riegeln (11) versehen ist, die zumindest auf den seitlichen Platten (1, 2) angeordnet sind, wobei zwei einander gegenüberliegende Riegel an ihren Enden durch zwei Metallbolzen (16) verbunden sind, die sich über die Breite der Deck- und Bodenplatte erstrecken.

8. Behälter nach Anspruch 7, **dadurch gekennzeichnet, dass** diese Bolzen (16) zumindest ein Ende mit Gewinde und Mutter (15) umfassen.
